# EUROPEAN PATENT APPLICATION

(11) **EP 4 009 700 A1**
(43) Date of publication of application: **08.06.2022**
(21) Application number: 20850861.4
(22) Date of filing: 01.08.2020
(51) Int. Cl.: H04W 36/00

(54) **SWITCHING METHOD AND APPARATUS**

(30) Priority: 02.08.2019 CN 201910712784
(71) Applicant: Huawei Technologies Co., Ltd., Longgang District Shenzhen, Guangdong 518129 (CN)
(72) Inventor: YING, Jiangwei, Shenzhen, Guangdong 518129 (CN)
(74) Representative: Gill Jennings & Every LLP
(86) International application number: PCT/CN2020/106485
(87) International publication number: WO 2021/023139

(57) **Abstract**

This application relates to the field of wireless communication technologies, and provides a handover method. The method includes: A communication device obtains first information, where the first information is used to indicate one or more first PLMNs that support PC5 reference interface communication. The communication device determines a target PLMN, where the target PLMN is a PLMN in the one or more first PLMNs. The communication device requests handover from a source PLMN to the target PLMN, where the source PLMN does not support the PC5 reference interface communication. According to solutions provided in embodiments, the communication device performs the handover to the target PLMN that supports the PC5 reference interface communication. In this way, the PC5 reference interface communication can be performed without interrupting a current service, so that user experience is improved.

## Description

This application claims priority to Chinese Patent Application No. 201910712784.3, filed with the China National Intellectual Property Administration on August 2, 2019 and entitled "HANDOVER METHOD AND APPARATUS", which is incorporated herein by reference in its entirety.

### TECHNICAL FIELD

The present invention relates to the field of communication technologies, and in particular, to a handover method and apparatus.

### BACKGROUND

Vehicle to everything (vehicle to X, V2X) is a key technology of an intelligent transportation system, and is considered to be one of fields that have the most industry potential and most clear market requirements in an internet of things system. Vehicle-to-everything wireless communication based on 5th-generation (the 5th-Generation, 5G) communication has two operation modes. One is sidelink communication, also referred to as prose communication 5 (prose communication 5, PC5) reference interface communication, namely, a manner of direct link communication between terminal devices. The other one is air interface link communication, also referred to as Uu reference interface communication, and may be radio (the radio interface between UTRAN and the user equipment, Uu) reference interface communication between a universal terrestrial radio access network (universal terrestrial radio access network, UTRAN) and user equipment, namely, a manner of uplink/downlink communication between a terminal device and a network device.

In a conventional technology, if a public land mobile network (Public Land Mobile Network, PLMN) in which a terminal device is currently located does not support a PC5 reference interface communication service, the following two processing methods may be used when the terminal device has a requirement for the PC5 reference interface communication service. Method 1: If an emergency service is executed during Uu reference interface communication, the Uu reference interface communication is maintained, and the PC5 reference interface communication service cannot be executed. Method 2: If a non-emergency service is executed by using a Uu reference interface communication, PLMN reselection is performed to reselect a PLMN that can support the PC5 reference interface communication service, and the terminal device executes the PC5 reference interface communication service in the reselected PLMN.

However, in the foregoing method 1, if the emergency service is executed during the Uu reference interface communication, the terminal device always cannot use the PC5 reference interface communication service. This affects experience of the terminal device on the PC5 reference interface communication service. In the foregoing method 2, if the non-emergency service is executed during the Uu reference interface communication, the terminal device deregisters from the PLMN in which the terminal device is currently located, performs the PLMN reselection, and initiates a procedure of registering with the reselected PLMN. When the terminal device deregisters from the PLMN in which the terminal device is currently located, a currently executed Uu reference interface communication service is interrupted. This affects user experience. Particularly, for application of ultra-reliable low-latency communication (ultra-Reliable and Low Latency Communications, URLLC) in 5G, the method 2 cannot ensure a requirement on high-reliability transmission of a URLLC service.

### SUMMARY

Embodiments of the present invention provide a handover method and apparatus.

According to one aspect, an embodiment of this application provides a handover method. The method includes:

A communication device (a terminal device or a second access network device) obtains first information, where the first information is used to indicate one or more first public land mobile networks PLMNs that support PC5 reference interface communication. The communication device determines a target PLMN, where the target PLMN is a PLMN in the one or more first PLMNs. The communication device requests handover from a source PLMN to the target PLMN, where the source PLMN does not support the PC5 reference interface communication.

According to the foregoing method, the communication device performs the handover to the target PLMN that supports the PC5 reference interface communication. In this way, the PC5 reference interface communication can be performed without interrupting a current service, so that user experience is improved.

In a possible design, that the communication device determines a target PLMN includes: The communication device obtains second information, where the second information is used to indicate a second PLMN in which a first access network device that supports the PC5 reference interface communication is located. The communication device determines the target PLMN based on the first information and the second information. Therefore, the communication device may determine the target PLMN in the first PLMNs, and the first access network device that supports the PC5 reference interface communication exists in the target PLMN.

In a possible design, that the communication device determines the target PLMN based on the first information and the second information includes: The communication device determines, based on the first information and the second information, that the second PLMN is a PLMN in the one or more first PLMNs. The communication device determines the second PLMN as the target PLMN. Therefore, the target PLMN determined by the communication device is not only a PLMN in the first PLMNs, but also a PLMN in the second PLMNs.

In a possible design, the method further includes: The communication device determines a target cell in the target PLMN. Alternatively, the communication device determines a target access network device in the target PLMN.

In a possible design, when the communication device is the terminal device (for example, UE), the method further includes: The communication device sends information about the target PLMN to a second access network device that serves the terminal device in the source PLMN. Therefore, the second access network device may perform the handover to the target PLMN.

In a possible design, the information about the target PLMN includes one or more of the following: an identifier of the target PLMN, an identifier of the target cell in the target PLMN, or an identifier of the target access network device in the target PLMN.

In a possible design, when the communication device is the terminal device, that the communication device requests handover from a source PLMN to the target PLMN includes: The communication device requests the handover from the source PLMN to the target PLMN when the communication device has a requirement for the PC5 reference interface communication.

In a possible design, when the communication device is the terminal device, the communication device sends, to the second access network device, either or both of the following information: first cause value information or first handover indication information, where the first cause value information is used to indicate that the handover is triggered by the PC5 reference interface communication, and the first handover indication information is used to indicate the second access network device to hand over the terminal device to the target PLMN, or the first handover indication information is used to indicate the second access network device to hand over the terminal device to the target access network device, where the target access network device is an access network device in the target cell in the target PLMN.

In a possible design, when the communication device is the terminal device, the communication device receives second handover indication information from the second access network device, where the second handover indication information is used to indicate the second access network device to perform the handover of the terminal device.

In a possible design, when the communication device is the terminal device, that the communication device sends the target PLMN to a second access network device that serves the terminal device includes: The communication device sends the target PLMN to the second access network device through an access and mobility management function network element. The method further includes: The communication device receives first indication information from the access and mobility management function network element, where the first indication information is used to indicate the second access network device to perform the handover of the terminal device.

In a possible design, when the communication device is the second access network device (for example, a source RAN device) that serves a terminal device in the source PLMN, that the communication device obtains first information includes: The communication device receives information about the first PLMNs from the terminal device.

In a possible design, when the communication device is the second access network device, that the communication device requests handover from a source PLMN to the target PLMN includes: The communication device sends third handover indication information to the terminal device, where the third handover indication information is used to indicate the second access network device to perform the handover of the terminal device to the target PLMN. Therefore, the second access network device may notify, to the terminal device, that the handover to the target PLMN is to be performed.

In a possible design, when the communication device is the second access network device, the method further includes: The communication device receives either or both of the following information: second cause value information or fourth handover indication information, where the second cause value information is used to indicate that the handover is triggered by the PC5 reference interface communication, and the fourth handover indication information is used to indicate the second access network device to perform the handover of the terminal device. Therefore, the second access network device may learn that the handover needs to be performed.

In a possible design, when the communication device is the second access network device, that the communication device performs the handover to the target PLMN includes: When the communication device determines, based on policy information, to perform the handover, the communication device performs the handover to the target PLMN, where the policy information is used to indicate that the communication device is allowed to perform the handover of the terminal device.

In a possible design, when the communication device is the second access network device, the policy information is used to indicate that the handover that is triggered by the PC5 reference interface communication and that is from the second PLMN in which the terminal device is located to the target PLMN is allowed to be performed; or the policy information is used to indicate that the handover triggered by the PC5 reference interface communication is allowed to be performed for the terminal device.

In a possible design, when the communication device is the second access network device, that the communication device receives information about the first PLMNs from a terminal device served by the second access network device includes: The communication device receives the information about the first PLMNs from the terminal device through an access and mobility management function network element. The method further includes: The communication device receives second indication information from the access and mobility management function network element, where the second indication information is used to indicate the second access network device to perform the handover of the terminal device to the target PLMN.

According to another aspect, this application further discloses a handover method. The method includes:

A second access network device (for example, a source RAN device) receives, from a terminal device (for example, UE), information about a PLMN determined based on first information and second information, where the first information is used to indicate one or more first PLMNs that support PC5 reference interface communication, and the second information is used to indicate a second PLMN in which a first access network device that supports the PC5 reference interface communication is located. The second access network device sends a handover request to an access and mobility management function network element, where the handover request is used to request to hand over the terminal device from a source PLMN to the target PLMN, and the source PLMN does not support the PC5 reference interface communication.

According to the foregoing method, the second access network device receives the information about the target PLMN from the terminal device, to determine to perform the handover to the target PLMN. In this way, the PC5 reference interface communication can be performed without interrupting a current service, so that user experience is improved.

In a possible design, the method further includes: The second access network device sends first handover indication information to the terminal device, where the first handover indication information is used to indicate the second access network device to hand over the terminal device to the target PLMN.

In a possible design, the method further includes: The second access network device receives, from the terminal device, either or both of the following information: cause value information or second handover indication information, where the cause value information is used to indicate that the handover is triggered by the PC5 reference interface communication, and the handover indication information is used to indicate the second access network device to hand over the terminal device to the target PLMN, or the handover indication information is used to indicate the second access network device to hand over the terminal device to a target access network device, where the target access network device is an access network device in a target cell in the target PLMN.

In a possible design, the method further includes: The second access network device determines the first handover indication information based on policy information, where the policy information is used to indicate that the second access network device is allowed to perform the handover of the terminal device.

In a possible design, the policy information is used to indicate that the handover that is triggered by the PC5 reference interface communication and that is from the second PLMN in which the terminal device is located to the target PLMN is allowed to be performed. Alternatively, the policy information is used to indicate that the handover triggered by the PC5 reference interface communication is allowed to be performed for the terminal device.

In a possible design, that a second access network device receives, from a terminal device, information about a target PLMN determined based on first information and second information includes: The second access network device receives the information about the target PLMN from the terminal device through an access and mobility management function network element. The method further includes: The second access network device receives third indication information from the access and mobility management function network element, where the third indication information is used to indicate the second access network device to perform the handover of the terminal device to the target PLMN.

According to another aspect, this application further discloses a handover method. The method includes:

A terminal device (for example, UE) determines that a source PLMN in which the terminal device is located does not support PC5 reference interface communication. The terminal device sends first information to an access network device (for example, a source RAN device), where the first information is used to indicate one or more first PLMNs that support the PC5 reference interface communication, and the access network device is an access network device that serves the terminal device in the source PLMN. According to the foregoing method, the terminal device sends, to the access network device, the one or more first PLMNs that support the PC5 reference interface communication, so that the access network device can determine a target PLMN in the one or more first PLMNs, to indicate handover of the terminal device to the target PLMN. In this way, the PC5 reference interface communication can be performed without interrupting a current service, so that user experience is improved.

In a possible design, the method further includes: The terminal device sends, to the access network device, either or both of the following information: cause value information or handover request information, where the cause value information is used to indicate that the handover is triggered by the PC5 reference interface communication, and the handover request information is used to request the access network device to perform the handover of the terminal device.

In a possible design, the method further includes: The terminal device receives handover indication information from the access network device, where the handover indication information is used to indicate the handover of the terminal device to the target PLMN, and the target PLMN is a PLMN in the one or more first PLMNs.

In a possible design, that the terminal device sends first information to an access network device includes: The terminal device sends the first information to the access network device when the terminal device has a requirement for the PC5 reference interface communication.

In a possible design, the terminal device sends the first information to the access network device, where the terminal device sends the first information to the access network device through an access and mobility management function network element.

According to another aspect, an embodiment of this application provides a handover apparatus. The apparatus has a function of implementing behavior of the communication device in the foregoing methods. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to enable the apparatus to perform a corresponding function in the foregoing methods. The transceiver is configured to implement communication between the apparatus and a terminal device/a second access network device/an access and mobility management function network element. The apparatus may further include a memory. The memory is configured to be coupled to the processor, and stores program instructions and data that are necessary for the apparatus.

According to another aspect, an embodiment of this application provides a handover apparatus. The apparatus has a function of implementing behavior of the second access network device in the foregoing methods. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to enable the apparatus to perform a corresponding function in the foregoing methods. The transceiver is configured to implement communication between the apparatus and a terminal device/an access and mobility management function network element. The apparatus may further include a memory. The memory is configured to be coupled to the processor, and stores program instructions and data that are necessary for the apparatus.

According to another aspect, an embodiment of this application provides a handover apparatus. The apparatus has a function of implementing behavior of the terminal device in the foregoing methods. The function may be implemented by hardware, or may be implemented by hardware executing corresponding software. The hardware or the software includes one or more modules corresponding to the foregoing function. In a possible design, a structure of the apparatus includes a processor and a transceiver. The processor is configured to enable the apparatus to perform a corresponding function in the foregoing methods. The transceiver is configured to implement communication between the apparatus and an access network device/an access and mobility management function network element. The apparatus may further include a memory. The memory is configured to be coupled to the processor, and stores program instructions and data that are necessary for the apparatus.

According to another aspect, an embodiment of this application provides a computer-readable storage medium. The computer-readable storage medium stores instructions. When the instructions are run on a computer, the computer is enabled to perform the methods in the foregoing aspects.

According to another aspect, an embodiment of this application provides a computer program product including instructions. When the computer program product runs on a computer, the computer is enabled to perform the methods in the foregoing aspects.

According to another aspect, this application provides a chip system. The chip system includes a processor, configured to support the foregoing apparatus or terminal device to implement a function in the foregoing aspects, for example, generate or process information in the foregoing methods. In a possible design, the chip system further includes a memory, and the memory is configured to store program instructions and data that are necessary for the apparatus. The chip system may include a chip, or may include a chip and another discrete component.

### BRIEF DESCRIPTION OF DRAWINGS

To describe technical solutions in embodiments of the present invention more clearly, the following describes the accompanying drawings used in the embodiments of the present invention or the background.
FIG. 1 is a schematic diagram of an architecture of a 5G-based vehicle-to-everything communication system according to an embodiment of this application;
FIG. 2 shows a handover method according to an embodiment of this application;
FIG. 3A and FIG. 3B are a flowchart of a handover method according to an embodiment of this application;
FIG. 4A and FIG. 4B are a flowchart of another handover method according to an embodiment of this application; and
FIG. 5A/FIG. 5B is a schematic diagram of a structure of a handover apparatus/terminal device according to an embodiment of this application.

### DESCRIPTION OF EMBODIMENTS

The following clearly describes technical solutions in embodiments of this application with reference to the accompanying drawings in the embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "a plurality of' means two or more.

For ease of understanding, the following describes some terms used in the embodiments of this application.

Vehicle to everything (vehicle to X, V2X) can provide vehicle information by using a sensor mounted on a vehicle, a vehicle-mounted terminal device, or the like, to implement vehicle to vehicle (vehicle to vehicle, V2V) communication, vehicle to infrastructure (vehicle to infrastructure, V2I) communication, vehicle to network (Vehicle to Network, V2N) communication, and vehicle to pedestrian (vehicle to pedestrian, V2P) communication. A terminal device related to the vehicle to everything may be referred to as a V2X terminal device.

A sidelink interface is a direct communication link interface between V2X terminal devices, and may be used for short-distance communication between the V2X terminal devices. The sidelink interface may also be referred to as a prose communication 5 (prose communication 5, PC5) reference interface, or a direct link interface.

An air interface link interface is also referred to as a Uu reference interface, and may be a radio (the radio interface between UTRAN and the user equipment, Uu) interface between a universal terrestrial radio access network (universal terrestrial radio access network, UTRAN) and user equipment. In the embodiments of this application, the air interface link interface may be a communication link interface between a terminal device and an access network device.

Sidelink communication capability information (PC5 capability for V2X) of a terminal device, also referred to as PC5 reference interface communication capability information, may be used to indicate a sidelink communication type supported by the terminal device. The communication type may be long term evolution (Long Term Evolution, LTE) PC5 communication or new radio (New Radio, NR) PC5 communication, and the communication type may change with evolution of a communication system. Sidelink capabilities of the terminal device may include three types: supporting only the NR PC5 communication, supporting only the LTE PC5 communication, and supporting both the LTE PC5 communication and the NR PC5 communication. It should be understood that the sidelink communication type supported by the terminal device may include one or more communication types. This is not specifically limited herein.

A source access network device (source RAN) is an access network device that currently provides a service for the terminal device.

A source PLMN is a PLMN in which the terminal device is currently located.

A source access and mobility management function (access and mobility management function, AMF) network element is an AMF network element that currently provides a service for the terminal device.

A target PLMN is a PLMN to which the terminal device is to be handed over.

A target RAN is an access network device that is located in the target PLMN and that provides a service for the terminal device after the terminal device is handed over to the target PLMN.

A target AMF network element is an AMF network element that is located in the target PLMN and that provides a service for the terminal device after the terminal device is handed over to the target PLMN.

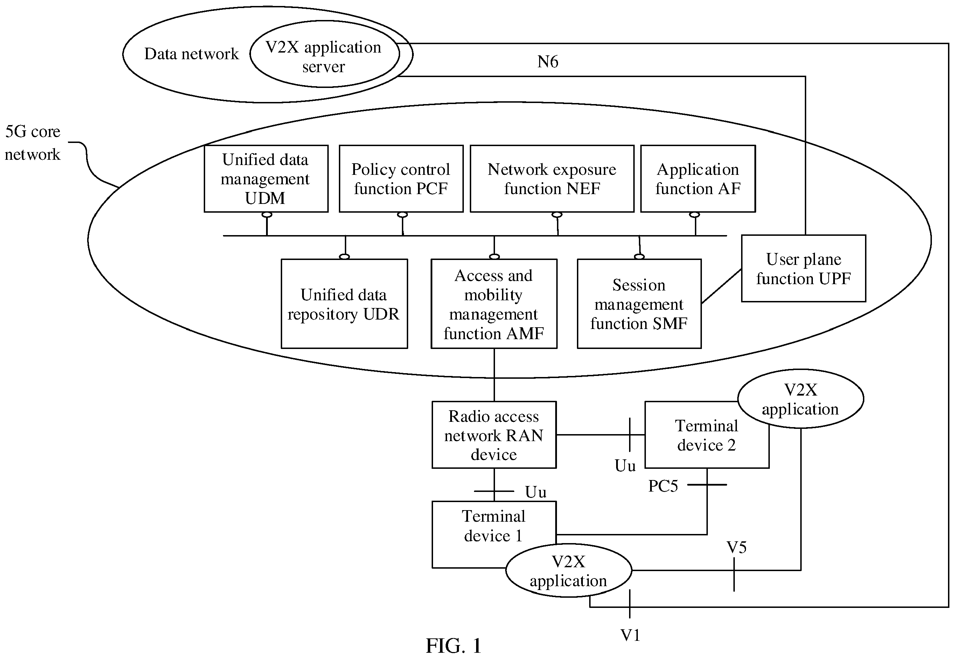

FIG. 1 is a schematic diagram of an architecture of a 5G-based V2X communication system. The V2X communication system mainly includes a 5G core network (the 5th generation Core, 5GC) and a next generation radio access network (next generation radio access network, NG-RAN). An architecture of the 5G core network may include a plurality of network elements. Examples are as follows:

An access and mobility management function network element may also be referred to as an access management device, and is mainly responsible for functions such as access control, mobility management, attach and detach, and gateway selection. When providing a service for a session in a terminal device, the AMF network element may provide a control plane storage resource for the session, to store a context of the session, and the like.

A session management function (session management function, SMF) network element is responsible for user plane network element selection, user plane network element redirection, internet protocol (internet protocol, IP) address assignment, bearer establishment, modification, and release, QoS control, and the like.

A user plane function (User plane function, UPF) network element is responsible for forwarding user data of the terminal device. For example, the UPF network element receives user data from a data network, and transmits the user data to the terminal device through an access network device. Alternatively, the UPF network element may receive user data from the terminal device through an access network device, and forward the user data to a data network.

A network exposure function (network exposure function, NEF) network element is mainly configured to support interaction between a 3rd generation partnership project (the 3rd generation partnership project, 3GPP) network and a third-party application. For example, the NEF network element may expose capabilities and events of the 3GPP network to a third party, to enhance or improve application quality of service. The 3GPP network may obtain related data of the third-party application from the third party through the NEF network element, to enhance intelligent decision-making of the network. The NEF network element may further support restoring structured data from a unified database or storing structured data in a unified database.

An application function (application function, AF) network element mainly supports interaction with a 3GPP core network to provide a service. For example, some services of the third party are provided to a network side.

A policy control function (policy control function, PCF) network element mainly provides a unified policy framework to control network behavior, or provides a policy rule for a control layer network function, and is responsible for obtaining user subscription information related to policy decision-making.

A unified data repository (unified data repository, UDR) network element is configured to store and retrieve subscription data, policy data, public architecture data, and the like, and is further used by the UDM, the PCF, and the NEF to obtain related data.

A unified data management (unified data management, UDM) network element is mainly used for user data management, for example, subscription information management. Specifically, for a V2X terminal, the subscription information management includes managing sidelink authorization information of the terminal device, cross-radio access technology sidelink scheduling authorization information of the terminal device, and the like. This is not specifically limited herein.

The foregoing network elements may be network elements implemented on dedicated hardware; or may be software instances running on dedicated hardware, or instances of virtualized functions on a virtualization platform. For example, the virtualization platform may be a cloud platform.

A radio access network (RAN) device in this system includes a base station, an access point, a macro base station, a micro base station (also referred to as a small cell), a relay station, an access point, and the like. The RAN device may be a device that communicates with the terminal device on an air interface in the access network by using one or more cells. The RAN device may be configured to perform mutual conversion between a received over-the-air frame and a received internet protocol (IP) packet, and serve as a router between the terminal device and a remaining part of the access network. The RAN device may further coordinate attribute management of the air interface. For example, the RAN device may be an evolved NodeB (NodeB, eNB, or e-NodeB, evolutional NodeB) in a long term evolution (long term evolution, LTE) system or an LTE-advanced (LTE-Advanced, LTE-A) system, a next generation NodeB (next generation NodeB, gNB) in a new radio (new radio, NR) system, or a centralized unit (centralized unit, CU) and a distributed unit (distributed unit, DU) in a cloud access network (Cloud RAN) system. This is not limited in the embodiments of this application. It should be noted that both the source access network device and the target access network device in this application may be RAN devices, or may be devices having a same function or similar functions.

The terminal device in the system is not limited to a 5G network, and includes a mobile phone, an internet-of-things device, a smart household device, an industrial control device, a vehicle device, and the like. The terminal device may also be referred to as user equipment (User Equipment, UE), a mobile station (Mobile Station), a mobile station (Mobile), a remote station (Remote Station), a remote terminal (Remote Terminal), an access terminal (Access Terminal), a terminal device (User Terminal), or a user agent (User Agent). This is not limited herein. The terminal device includes a device that provides voice and/or data connectivity for a user. For example, the terminal device may include a handheld device having a wireless connection function, or a processing device connected to a wireless modem. The terminal device may communicate with a core network over a RAN, and exchange a voice and/or data with the RAN. Specifically, in a V2V communication process, the terminal device may be a vehicle-mounted terminal. In a V2I communication process, the terminal device may be a vehicle-mounted terminal or an infrastructure having a mobile communication function. In another V2X scenario, the terminal device may alternatively be another V2X device. This is not specifically limited herein. The terminal device may alternatively be a wearable device, such as glasses, gloves, watches, clothing, and shoes, or another portable device that may be directly worn on a body or integrated into clothes or accessories of a user.

In addition, in the diagram of the architecture of the vehicle-to-everything communication system shown in FIG. 1, the terminal device may communicate with another terminal device through a sidelink interface (PC5 reference interface). Alternatively, the terminal device may communicate with a radio access network through an air interface link interface (Uu reference interface), and may further communicate with a V2X server or another terminal device by using a radio access network and a core network.

In addition, the embodiments of this application are further applicable to another future-oriented communication technology. Network architectures and service scenarios described in this application are intended to describe the technical solutions in this application more clearly, but are not intended to limit the technical solutions provided in this application. A person of ordinary skill in the art may know that as network architectures evolve and a new service scenario emerges, the technical solutions provided in this application are also applicable to similar technical problems.

The following uses the 5G vehicle-to-everything communication system shown in FIG. 1 as an example to describe the technical solutions in this application in detail by using some embodiments. The following several embodiments may be combined with each other, and a same or similar concept or process may not be described again in some embodiments.

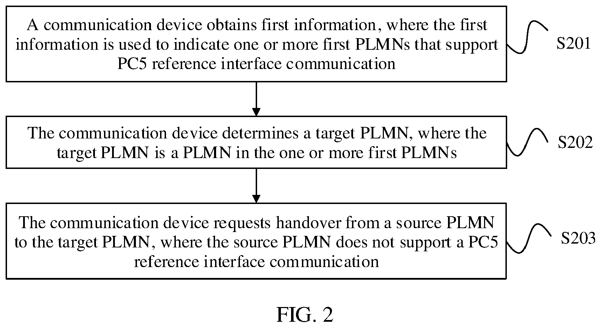

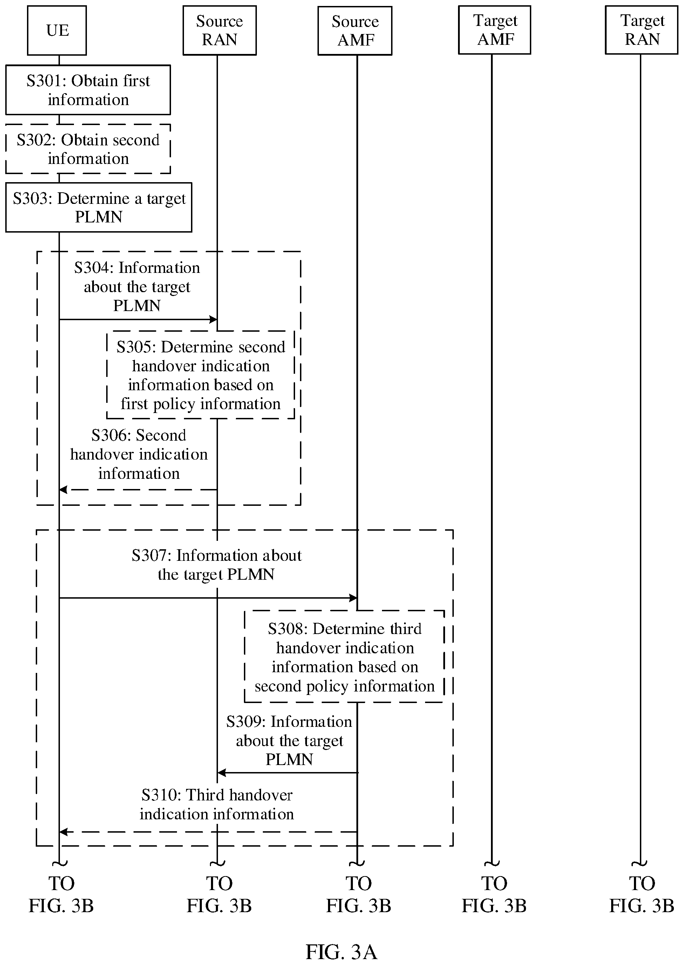

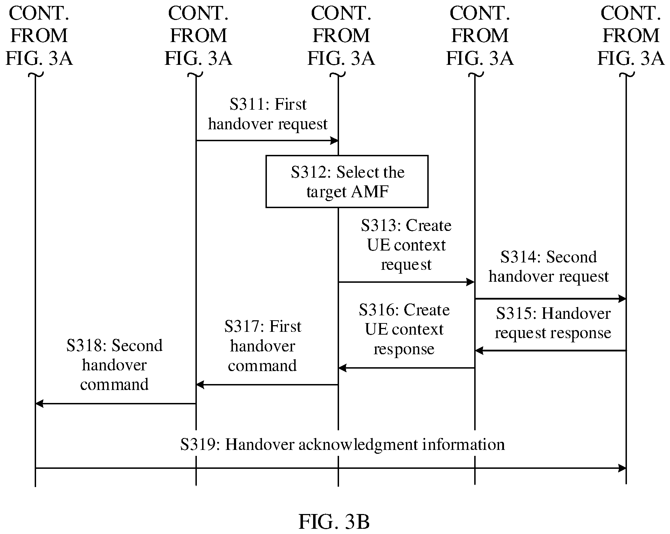

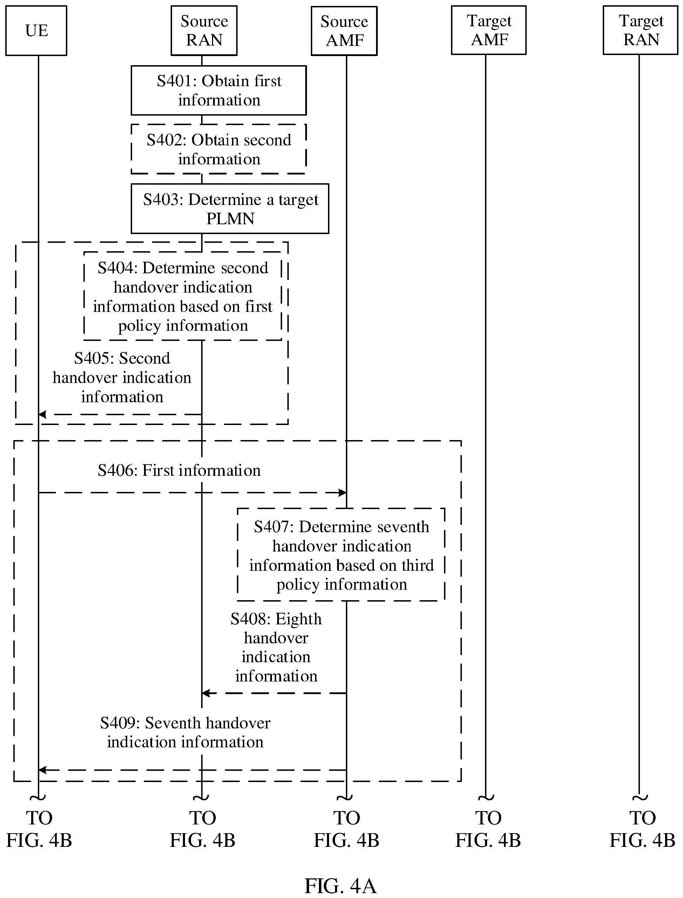

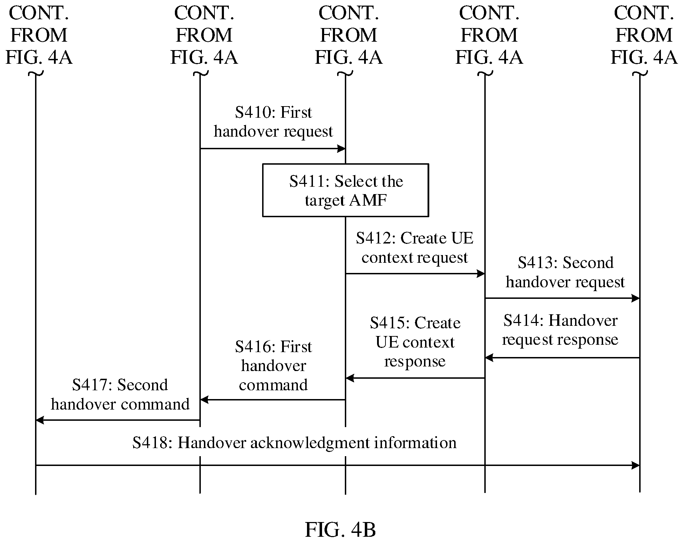

FIG. 2 shows a handover method according to an embodiment of this application. According to the method, a communication device performs handover to a target PLMN that supports PC5 reference interface communication. In this way, the PC5 reference interface communication can be performed without interrupting a current service, so that user experience is improved. In a first case, the communication device may be UE. In this case, FIG. 2 is described with reference to FIG. 3A and FIG. 3B. In a second case, the communication device may be a source RAN device, and the source RAN device is a RAN device that currently serves UE. In this case, FIG. 2 is described with reference to FIG. 4A and FIG. 4B.

As shown in FIG. 2, the method may include the following steps.

S201: The communication device obtains first information, where the first information is used to indicate one or more first public land mobile networks PLMNs that support the PC5 reference interface communication.

The communication device is the UE or the source RAN device.

In a scenario, the first information includes one or more identifiers of the one or more first PLMNs that support the PC5 reference interface communication. For example, the identifier may be an identifier (identifier, ID) of the first PLMN. For example, the first information includes a PLMN ID 1 and a PLMN ID 2. A PLMN 1 and a PLMN 2 are two first PLMNs that support the PC5 reference interface communication. The PLMN ID 1 is an identifier of the PLMN 1, and the PLMN ID 2 is an identifier of the PLMN 2.

Alternatively, in another scenario, the first information includes a list of the one or more first PLMNs that support the PC5 reference interface communication. The list of the first information includes IDs of the first PLMNs. For example, as shown in Table 1, the list of the first PLMNs includes a PLMN ID 1 and a PLMN ID 2. A PLMN 1 and a PLMN 2 are two first PLMNs that support the PC5 reference interface communication. The PLMN ID 1 is an identifier of the PLMN 1, and the PLMN ID 2 is an identifier of the PLMN 2.

**Table 1: First information**

| Identifier of a first PLMN |
|---|
| PLMN ID 1 |
| PLMN ID 2 |

S202: The communication device determines a target PLMN, where the target PLMN is a PLMN in the one or more first PLMNs.

Optionally, the communication device obtains second information, where the second information is used to indicate a second PLMN in which a first access network device that supports the PC5 reference interface communication is located. The communication device determines the target PLMN based on the first information and the second information.

For example, the second information includes an identifier of the second PLMN. The identifier may be an ID of the second PLMN.

For example, the communication device determines, based on the first information and the second information, that the second PLMN is a PLMN in the one or more first PLMNs. In this case, the communication device determines the second PLMN as the target PLMN.

For example, the second information is shown in Table 2. First access network devices that support the PC5 reference interface communication include a RAN 1 and a RAN 2. A PLMN in which the RAN 1 is located is a PLMN 1, and a PLMN in which the RAN 2 is located is a PLMN 3. In other words, the second information in Table 2 includes a PLMN ID 1 and a PLMN ID 3. The PLMN ID 1 is an identifier of the PLMN 1, and the PLMN ID 3 is an identifier of the PLMN 3.

**Table 2: Second information**

| First access network device | Identifier of a second PLMN in which a first access network device is located |
|---|---|
| RAN 1 | PLMN ID 1 |
| RAN 2 | PLMN ID 3 |

For example, the communication device may determine, according to Table 1 and Table 2, that the PLMN 1 in the second PLMNs is the PLMN 1 in the first PLMNs. In this case, the communication device determines the PLMN 1 as the target PLMN. In other words, the first access network device RAN 1 that supports the PC5 reference interface communication exists in the PLMN 1 in the first PLMNs, and a first access network device that supports the PC5 reference interface communication does not exist in the PLMN 2 in the first PLMNs. Therefore, the communication device determines that the target PLMN is the PLMN 1.

Optionally, if a first access network device that supports the PC5 reference interface communication exists in each of a plurality of PLMNs in the first PLMNs, the communication device determines a PLMN from the plurality of PLMNs as the target PLMN. In a possible manner, the communication device selects a PLMN from the plurality of PLMNs as the target PLMN based on selection policy information. For example, the selection policy information includes priorities of the PLMNs. In another possible manner, the communication device randomly selects a PLMN from the plurality of PLMNs as the target PLMN.

Optionally, the communication device determines a target cell in the target PLMN. Alternatively, the communication device determines a target access network device in the target PLMN.

S203: The communication device requests handover from a source PLMN to the target PLMN, where the source PLMN does not support the PC5 reference interface communication.

A specific procedure in which the communication device requests the handover from the source PLMN to the target PLMN is described with reference to FIG. 3A, FIG. 3B, FIG. 4A, and FIG. 4B.

Optionally, in step S202, if the communication device further determines the target cell in the target PLMN, the communication device requests handover from the source PLMN to the target cell in the target PLMN; or if the communication device further determines the target access network device in the target PLMN, the communication device requests handover from the source PLMN to the target access network device in the target PLMN.

According to the method in this embodiment of the present invention, in the scenario shown in FIG. 1, when the source PLMN in which the terminal device is currently located does not support the PC5 reference interface communication, the communication device performs the handover to the target PLMN that supports the PC5 reference interface communication. In this way, the PC5 reference interface communication can be performed without interrupting the current service, so that user experience is improved.

FIG. 3A and FIG. 3B are a flowchart of a handover method according to an embodiment of this application. The method may be applied to a case in which the communication device in FIG. 2 is a terminal device (UE) in the 5G vehicle-to-everything communication system shown in FIG. 1. FIG. 3A and FIG. 3B are described with reference to FIG. 1 and FIG. 2. As shown in FIG. 3A and FIG. 3B, the method may include the following steps.

S301: The UE obtains first information.

For example, the UE may be a terminal device 1 or a terminal device 2 in FIG. 1.

For example, the UE stores the first information in a registration process.

For content of the first information, refer to the descriptions of the first information in step S201 in FIG. 2. Details are not described herein again.

Optionally, the method further includes S302.

S302: The UE obtains second information.

For content of the second information, refer to the descriptions of the second information in step S202 in FIG. 2. Details are not described herein again.

For example, the UE may obtain the second information by monitoring a system information block (system information block, SIB) message of another cell. The UE may obtain the second information in the following two manners.

Manner 1: The UE has two independent receiving modules, and the UE may monitor the SIB message of the another cell when a Uu reference interface remains in connected mode.

Manner 2: If the UE has only one receiving module, the UE monitors the SIB message of the another cell by using a measurement gap (gap). Monitoring by using the measurement gap (gap) further includes the following two cases.

Case 1: In a radio resource control (radio resource control, RRC) connection establishment process, a RAN authorizes the UE to generate a gap. After receiving a grant from the RAN, the UE generates the gap to monitor the SIB message of the another cell.

Case 2: A RAN allocates a gap to the UE, to enable the UE to monitor the SIB message of the another cell.

S303: The UE determines a target PLMN.

For a process in which the UE determines the target PLMN, refer to a process in which the communication device determines the target PLMN in step S202 in FIG. 2. Details are not described herein again.

After step S303, the UE may be handed over to the target PLMN in two manners.

Implementation 1: After receiving information about the target PLMN, a source RAN performs the handover of the terminal device to the target PLMN. Optionally, the source RAN determines second handover indication information based on the received information about the target PLMN, and sends the second handover indication information to the UE. For example, the second handover indication information is used to indicate the source RAN to perform the handover of the UE. For details, refer to the following descriptions of step S304 to step S306.

S304: The UE sends the information about the target PLMN to the source RAN. Correspondingly, the source RAN receives the information about the target PLMN from the UE.

Optionally, the UE sends the information about the target PLMN to the source RAN by using an RRC message. The information about the target PLMN includes one or more of the following: an identifier (ID) of the target PLMN, an identifier of a cell in the target PLMN, or an identifier of a base station in the target PLMN. For example, an identifier of a target base station includes the ID of the target PLMN. For example, an identifier of a target cell includes the ID of the target PLMN.

Optionally, the UE further sends, to the source RAN, either or both of the following information: first cause value information or first handover indication information. The first cause value information is used to indicate that the handover is triggered by PC5 reference interface communication. The first handover indication information is used to indicate the source RAN to hand over the terminal device to the target PLMN, or the first handover indication information is used to indicate the source RAN to hand over the terminal device to a target access network device. For example, the target access network device is an access network device in the target cell in the target PLMN. For example, the UE may send either or both of the foregoing information to the source RAN by using the RRC message.

It should be noted that, if the source RAN can learn, based on the received information about the target PLMN, that the handover to the target PLMN needs to be performed, the UE does not need to send the first handover indication information to the source RAN; or if the source RAN cannot learn, based on the received information about the target PLMN, that the handover to the target PLMN needs to be performed, the UE further sends the first handover indication information to the source RAN.

S305: The source RAN determines the second handover indication information based on first policy information.

The first policy information is used to indicate that the source RAN is allowed to perform the handover of the UE. The second handover indication information is used to indicate the source RAN to perform the handover of the UE.

For example, the first policy information is used to indicate that the handover that is triggered by the PC5 reference interface communication and that is from a source PLMN in which the UE is located to the target PLMN is allowed to be performed. For example, if the first policy information is used to indicate that handover that is triggered by the PC5 reference interface communication and that is from a PLMN 1 to a PLMN 2 is allowed to be performed, when the UE is located in the PLMN 1, and the target PLMN determined by the UE is the PLMN 2, the handover triggered by the PC5 reference interface communication is allowed to be performed.

Alternatively, the first policy information is used to indicate that the handover triggered by the PC5 reference interface communication is allowed to be performed for the UE. For example, if the first policy information is used to indicate that the handover triggered by the PC5 reference interface communication is allowed to be performed for UE 1, when the handover triggered by the PC5 reference interface communication needs to be performed for the UE 1, the handover is allowed to be performed according to a first policy information.

S306: The source RAN sends the second handover indication information to the UE. Correspondingly, the UE receives the second handover indication information from the source RAN.

For example, the source RAN sends the second handover indication information to the UE by using an RRC response message.

It should be noted that steps S305 and S306 are optional steps.

Implementation 2: After receiving information about the target PLMN, a source AMF determines third handover indication information and fifth handover indication information, and sends the fifth handover indication information and the information about the target PLMN to a source RAN, to indicate the source RAN to perform the handover. The source AMF sends the third handover indication information to the UE, to indicate the source RAN to perform the handover of the UE. For details, refer to the following descriptions of step S307 to step S310.

S307: The UE sends the information about the target PLMN to the source AMF. Correspondingly, the source AMF receives the information about the target PLMN from the UE.

For example, the source AMF may be the access and mobility management function AMF in FIG. 1.

For example, the UE sends, through the source RAN, the information about the target PLMN to the source AMF by using a non-access stratum (non-access stratum, NAS) message. Because the source RAN does not parse the NAS message, the source RAN cannot obtain the information about the target PLMN. For the information about the target PLMN, refer to the descriptions of the information about the target PLMN in step S304. Details are not described herein again.

Optionally, the UE further sends, to the source AMF, either or both of the following information: second cause value information or fourth handover indication information. The second cause value information is used to indicate that the handover is triggered by PC5 reference interface communication. The fourth handover indication information is used to indicate the source RAN to hand over the terminal device to the target PLMN, or the fourth handover indication information is used to indicate the source RAN to hand over the terminal device to a target access network device. For example, the target access network device is an access network device in a target cell in the target PLMN. For example, the UE may send either or both of the foregoing information to the source AMF by using the NAS message.

It should be noted that, if the source AMF can learn, based on the received information about the target PLMN, that the handover to the target PLMN needs to be performed by the source RAN, the UE does not need to send the fourth handover indication information to the source AMF; or if the source AMF cannot learn, based on the received information about the target PLMN, that the handover to the target PLMN needs to be performed by the source RAN, the UE further sends the fourth handover indication information to the source AMF.

S308: The source AMF determines the third handover indication information according to a second policy.

The second policy information is used to indicate that the source RAN is allowed to perform the handover of the UE. The third handover indication information is used to indicate the source RAN to perform the handover of the UE.

For example, the second policy information is used to indicate that the handover that is triggered by the PC5 reference interface communication and that is from a source PLMN in which the UE is located to the target PLMN is allowed to be performed. For example, if the second policy information is used to indicate that handover that is triggered by the PC5 reference interface communication and that is from a PLMN 1 to a PLMN 2 is allowed to be performed, when the UE is located in the PLMN 1, and the target PLMN determined by the UE is the PLMN 2, the handover triggered by the PC5 reference interface communication is allowed to be performed.

Alternatively, the second policy information is used to indicate that the handover triggered by the PC5 reference interface communication is allowed to be performed for the UE. For example, if the second policy information is used to indicate that the handover triggered by the PC5 reference interface communication is allowed to be performed for UE 1, when the handover triggered by the PC5 reference interface communication needs to be performed for the UE 1, the handover is allowed to be performed according to the second policy.

Optionally, the source AMF further determines the fifth handover indication information according to the second policy. The fifth handover indication information is used to indicate the source RAN to perform the handover.

S309: The source AMF sends the information about the target PLMN to the source RAN. Correspondingly, the source RAN receives the information about the target PLMN from the source AMF.

For example, the source AMF sends the information about the target PLMN to the source RAN by using an N2 interface message.

Optionally, if the source RAN cannot learn, based on the received information about the target PLMN, that the handover to the target PLMN needs to be performed, the source AMF further sends the fifth handover indication information to the source RAN; or if the source RAN can learn, based on the received information about the target PLMN, that the handover to the target PLMN needs to be performed, the source AMF does not need to send the fifth handover indication information to the source RAN. For the fifth handover indication information, refer to the descriptions in step S308. Details are not described herein again.

S310: The source AMF sends the third handover indication information to the UE. Correspondingly, the UE receives the third handover indication information from the source AMF.

For example, the source AMF sends the third handover indication information to the UE by using a NAS response message.

According to the method in this embodiment of the present invention, in the scenario shown in FIG. 1, the source RAN can hand over the UE to the target PLMN that supports the PC5 reference interface communication. In this way, the PC5 reference interface communication can be performed without interrupting a current service, so that user experience is improved.

Optionally, when the UE has a requirement for the PC5 reference interface communication, the source RAN performs the handover of the UE to the target PLMN.

It should be noted that steps S308 and S310 are optional steps.

Optionally, after receiving the information about the target PLMN, the source RAN performs the following handover procedure.

S311: The source RAN sends a first handover request to the source AMF. Correspondingly, the source AMF receives the first handover request from the source RAN.

For example, the first handover request includes either or both of the following information: a target identifier (Target ID) or a source to target transparent container (Source to Target transparent container). The target identifier is used to indicate an identifier of the target access network device to which the terminal device is handed over. The source to target transparent container is configured to transmit information that is related to a radio resource and that is generated on a source base station side for the UE.

S312: The source AMF selects a target AMF.

S313: The source AMF sends a create UE context request to the target AMF. Correspondingly, the target AMF receives the create UE context request from the source AMF.

For example, the source AMF sends N2 interface information (N2 Information) and UE context information (UE context information) to the target AMF by invoking a create UE context request (Namf_Communication_CreateUEContext Request) service.

S314: The target AMF sends a second handover request to the target RAN. Correspondingly, the target RAN receives the second handover request from the target AMF.

For example, the second handover request includes a source to target transparent container. The source to target transparent container is configured to transmit information that is related to a radio resource and that is generated on a source base station side for the UE.

S315: The target RAN sends a handover request response to the target AMF. Correspondingly, the target AMF receives the handover request response from the target RAN.

S316: The target AMF sends a create UE context response to the source AMF. Correspondingly, the source AMF receives the create UE context response from the target AMF.

For example, the target AMF sends N2 interface session management information (N2 SM Information) to the source AMF by invoking a create UE context response (Namf_Communication_CreateUEContext Response) service.

S317: The source AMF sends a first handover command to the source RAN. Correspondingly, the source RAN receives the first handover command from the source AMF.

For example, the first handover command includes a target to source transparent container (Target to Source transparent container). The target to source transparent container is configured to transmit information that is related to a radio resource and that is generated on a target base station side for the UE.

S318: The source RAN sends a second handover command to the UE. Correspondingly, the UE receives the second handover command from the source RAN.

For example, the second handover command includes a target to source transparent container (Target to Source transparent container). The target to source transparent container is configured to transmit information that is related to a radio resource and that is generated on a target base station side for the UE.

S319: The UE sends handover acknowledgment information to the target RAN. Correspondingly, the target RAN receives the handover acknowledgment information from the UE.

The target RAN learns, by using the handover acknowledgment information, that the UE is handed over successfully.

FIG. 4A and FIG. 4B are a flowchart of another handover method according to an embodiment of this application. The method may be applied to a case in which the communication device in FIG. 2 is a source RAN in the 5G vehicle-to-everything communication system shown in FIG. 1. FIG. 4A and FIG. 4B are described with reference to FIG. 2, FIG. 3A, and FIG. 3B. As shown in FIG. 4A and FIG. 4B, the method may include the following steps.

S401: The source RAN obtains first information.

For example, the source RAN receives the first information from UE. Alternatively, UE sends the first information to a source AMF by using a NAS message, and then the source AMF sends the first information to the source RAN.

For content of the first information, refer to the descriptions of the first information in step S201 in FIG. 2. Details are not described herein again.

Optionally, the source RAN may further receive either or both of the following information: third cause value information or sixth handover indication information. The third cause value information is used to indicate that handover is triggered by PC5 reference interface communication. The sixth handover indication information is used to indicate the source RAN to perform handover of a terminal device. For example, the source RAN receives either or both of the foregoing information from the UE. Alternatively, the UE sends either or both of the foregoing information to the source AMF by using the NAS message, and then the source AMF sends either or both of the foregoing information to the source RAN.

It should be noted that, if the source RAN can learn, based on the received first information, that the handover needs to be performed by the source RAN, the UE does not need to send the sixth handover indication information to the source RAN; or if the source RAN cannot learn, based on the received first information, that the handover needs to be performed by the source RAN, the UE further sends the sixth handover indication information to the source RAN.

Optionally, the method further includes S402.

S402: The source RAN obtains second information.

For example, the source RAN may obtain the second information by monitoring a broadcast message of a neighboring base station. Alternatively, the source RAN may obtain, by using Xn interface signaling, a PC5 communication capability supported by a neighboring base station, to obtain the second information.

S403: The source RAN determines a target PLMN.

For a process in which the source RAN determines the target PLMN, refer to a process in which the communication device determines the target PLMN in step S202 in FIG. 2. Details are not described herein again.

After step S403, the source RAN may perform handover to the target PLMN in two manners.

Implementation 1: After determining the target PLMN, the source RAN determines second handover indication information, and sends the second handover indication information to the UE, to indicate the source RAN to perform the handover of the UE. For details, refer to descriptions of step S404 and step S405.

S404: The source RAN determines the second handover indication information based on first policy information.

S405: The source RAN sends the second handover indication information to the UE. Correspondingly, the UE receives the second handover indication information from the source RAN.

For steps S404 and S405, refer to the descriptions of steps S305 and S306 in FIG. 3A and FIG. 3B. Details are not described herein again. It should be noted that steps S404 and S405 are optional steps.

Implementation 2: After receiving the first information, the source AMF determines third handover indication information and fifth handover indication information, and sends the fifth handover indication information to the source RAN, to indicate the source RAN to perform the handover. The source AMF sends the third handover indication information to the UE, to indicate the source RAN to perform the handover of the UE. For details, refer to the following descriptions of step S406 to step S409.

S406: The UE sends the first information to the source AMF. Correspondingly, the source AMF receives the first information from the UE.

It should be noted that, if the UE has sent the first information to the source AMF by using the NAS message in step S401, step S406 is not performed, and steps S407 to S409 are performed after step S401.

For example, the UE sends, through the source RAN, the first information to the source AMF by using the NAS message.

Optionally, the UE further sends, to the source AMF, either or both of the following information: third cause value information or sixth handover indication information. The third cause value information is used to indicate that handover is triggered by PC5 reference interface communication. The sixth handover indication information is used to indicate the source RAN to perform handover of a terminal device. For example, the UE may send either or both of the foregoing information to the source AMF by using the NAS message.

It should be noted that, if the source AMF can learn, based on the received first information, that the handover needs to be performed by the source RAN, the UE does not need to send the sixth handover indication information to the source AMF; or if the source AMF cannot learn, based on the received first information, that the handover needs to be performed by the source RAN, the UE further sends the sixth handover indication information to the source AMF.

S407: The source AMF determines seventh handover indication information based on third policy information.

The third policy information is used to indicate that the source RAN is allowed to perform the handover of the UE. The seventh handover indication information is used to indicate the source RAN to perform the handover of the UE.

For example, the third policy information is used to indicate that the handover triggered by the PC5 reference interface communication is allowed to be performed for the UE. For example, if the third policy information is used to indicate that the handover triggered by the PC5 reference interface communication is allowed to be performed for UE 1, when the handover triggered by the PC5 reference interface communication needs to be performed for the UE 1, the handover is allowed to be performed based on the third policy information.

Optionally, the source AMF further determines eighth handover indication information based on the third policy information. The eighth handover indication information is used to indicate the source RAN to perform the handover.

S408: The source AMF sends the eighth handover indication information to the source RAN. Correspondingly, the source RAN receives the eighth handover indication information from the source AMF.

For example, the source AMF sends the eighth handover indication information to the source RAN by using an N2 interface message. For the eighth handover indication information, refer to the descriptions in step S407. Details are not described herein again.

S409: The source AMF sends the seventh handover indication information to the UE. Correspondingly, the UE receives the seventh handover indication information from the source AMF.

For example, the source AMF sends the seventh handover indication information to the UE by using a NAS response message. For the seventh handover indication information, refer to the descriptions in step S407. Details are not described herein again.

According to the method in this embodiment of the present invention, in the scenario shown in FIG. 1, the source RAN can hand over the UE to the target PLMN that supports the PC5 reference interface communication. In this way, the PC5 reference interface communication can be performed without interrupting a current service, so that user experience is improved.

Optionally, when the UE has a requirement for the PC5 reference interface communication, the source RAN performs the handover of the UE to the target PLMN.

Optionally, after determining the target PLMN in step S403, the source RAN performs a handover procedure in steps S410 to S418. For steps S410 to S418, refer to the descriptions of steps S311 to S319 in FIG. 3A and FIG. 3B. Details are not described herein again.

In the foregoing embodiments provided in this application, various solutions of the handover method provided in the embodiments of this application are separately described from perspectives of the network elements and interaction between the network elements. It may be understood that, to implement the foregoing functions, the network elements and the devices, for example, the radio access network device, the access and mobility management function network element, the terminal device, a data management function network element, and a network slice selection function network element, include corresponding hardware structures and/or software modules for performing the functions. A person skilled in the art should easily be aware that units and algorithm steps in the examples described with reference to the embodiments disclosed in this specification can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

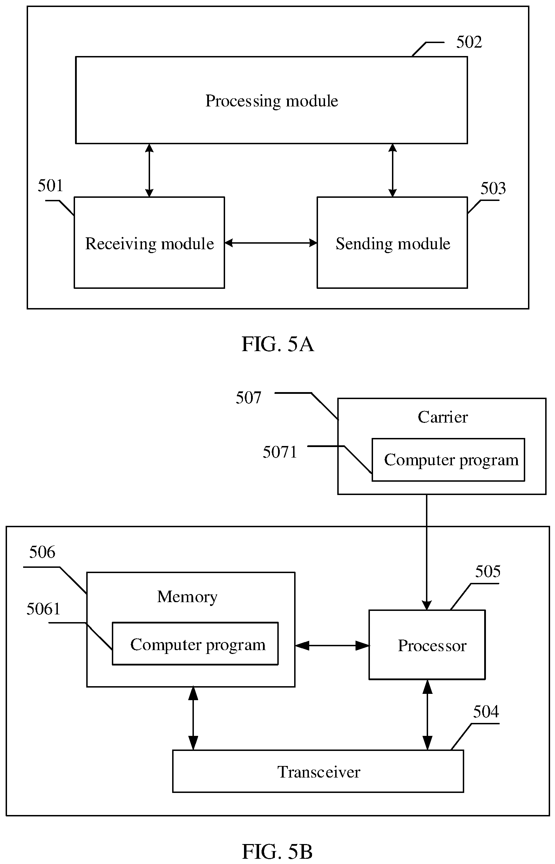

For example, when the network element implements a corresponding function by using the software module, as shown in FIG. 5A, a handover apparatus may include a receiving module 501, a processing module 502, and a sending module 503.

In an embodiment, the handover apparatus may be configured to perform operations of the communication device in FIG. 2, the UE in FIG. 3A and FIG. 3B, or the source RAN in FIG. 4A and FIG. 4B. Examples are as follows:
The receiving module 501 is configured to obtain first information, where the first information is used to indicate one or more first PLMNs that support PC5 reference interface communication. The processing module 502 is configured to determine a target PLMN, where the target PLMN is a PLMN in the one or more first PLMNs. The processing module 502 is configured to request handover from a source PLMN to the target PLMN, where the source PLMN does not support the PC5 reference interface communication.

Therefore, in this embodiment of the present invention, the handover apparatus performs the handover to the target PLMN that supports the PC5 reference interface communication. In this way, the PC5 reference interface communication can be performed without interrupting a current service, so that user experience is improved.

Optionally, the receiving module 501 is configured to obtain second information, where the second information is used to indicate a second PLMN in which a first access network device that supports the PC5 reference interface communication is located.

Optionally, the processing module 502 is configured to determine the target PLMN based on the first information and the second information.

Optionally, the processing module 502 is configured to determine, based on the first information and the second information, that the second PLMN is a PLMN in the one or more first PLMNs, to determine the second PLMN as the target PLMN.

Optionally, the processing module 502 is further configured to: determine a target cell in the target PLMN, or determine a target access network device in the target PLMN.

Optionally, the sending module 503 is configured to send information about the target PLMN to a second access network device that serves a terminal device in the source PLMN.

Optionally, the information about the target PLMN includes one or more of the following: an identifier of the target PLMN, an identifier of the target cell in the target PLMN, or an identifier of the target access network device in the target PLMN.

Optionally, the processing module 502 is configured to request the handover from the source PLMN to the target PLMN when the handover apparatus has a requirement for the PC5 reference interface communication.

Optionally, the sending module 503 is further configured to send, to the second access network device, either or both of the following information: first cause value information or first handover indication information, where the first cause value information is used to indicate that the handover is triggered by the PC5 reference interface communication, and the first handover indication information is used to indicate the second access network device to hand over the terminal device to the target PLMN, or the first handover indication information is used to indicate the second access network device to hand over the terminal device to the target access network device, where the target access network device is an access network device in the target cell in the target PLMN.

Optionally, the receiving module 501 is further configured to receive second handover indication information from the second access network device, where the second handover indication information is used to indicate the second access network device to perform the handover of the terminal device.

Optionally, the sending module 503 is configured to send the target PLMN to the second access network device through an access and mobility management function network element. The receiving module 501 is further configured to receive first indication information from the access and mobility management function network element, where the first indication information is used to indicate the second access network device to perform the handover of the terminal device.

Optionally, when the handover apparatus is a second access network device that serves a terminal device in the source PLMN, the receiving module 501 is configured to receive information about the first PLMNs from the terminal device.

Optionally, the sending module 503 is configured to send third handover indication information to the terminal device, where the third handover indication information is used to indicate the second access network device to perform the handover of the terminal device to the target PLMN.

Optionally, the receiving module 501 is further configured to receive either or both of the following information: second cause value information or fourth handover indication information, where the second cause value information is used to indicate that the handover is triggered by the PC5 reference interface communication, and the fourth handover indication information is used to indicate the second access network device to perform the handover of the terminal device.

Optionally, when the handover apparatus determines, based on policy information, to perform the handover, the processing module 502 is configured to perform the handover to the target PLMN, where the policy information is used to indicate that the handover apparatus is allowed to perform the handover of the terminal device.

Optionally, the policy information is used to indicate that the handover that is triggered by the PC5 reference interface communication and that is from the second PLMN in which the terminal device is located to the target PLMN is allowed to be performed. Alternatively, the policy information is used to indicate that the handover triggered by the PC5 reference interface communication is allowed to be performed for the terminal device.

Optionally, the receiving module 501 is configured to receive information about the first PLMNs from a terminal device through an access and mobility management function network element. The receiving module 501 is further configured to receive second indication information from the access and mobility management function network element, where the second indication information is used to indicate the second access network device to perform the handover of the terminal device to the target PLMN.

In addition, the receiving module 501, the processing module 502, and the sending module 503 in the handover apparatus may further implement other operations or functions of the communication device in FIG. 2, the UE in FIG. 3A and FIG. 3B, or the source RAN in FIG. 4A and FIG. 4B. Details are not described herein again.

In another embodiment, the handover apparatus shown in FIG. 5A may alternatively be configured to perform operations of the source RAN in FIG. 3A and FIG. 3B. Examples are as follows:

The receiving module 501 is configured to receive, from a terminal device, information about a PLMN determined based on first information and second information, where the first information is used to indicate one or more first PLMNs that support PC5 reference interface communication, and the second information is used to indicate a second PLMN in which a first access network device that supports the PC5 reference interface communication is located. The sending module 503 is configured to send a handover request to an access and mobility management function network element, where the handover request is used to request to hand over the terminal device from a source PLMN to the target PLMN, and the source PLMN does not support the PC5 reference interface communication.

Therefore, in this embodiment of the present invention, the handover apparatus receives the information about the target PLMN from the terminal device, to determine to perform the handover to the target PLMN. In this way, the PC5 reference interface communication can be performed without interrupting a current service, so that user experience is improved.

Optionally, the sending module 503 is further configured to send first handover indication information to the terminal device, where the first handover indication information is used to indicate a second access network device to hand over the terminal device to the target PLMN.

Optionally, the receiving module 501 is further configured to receive, from the terminal device, either or both of the following information: cause value information or second handover indication information, where the cause value information is used to indicate that the handover is triggered by the PC5 reference interface communication, and the handover indication information is used to indicate the second access network device to hand over the terminal device to the target PLMN, or the handover indication information is used to indicate the second access network device to hand over the terminal device to a target access network device, where the target access network device is an access network device in a target cell in the target PLMN. Optionally, the processing module 502 is configured to determine the first handover indication information based on policy information, where the policy information is used to indicate that the second access network device is allowed to perform the handover of the terminal device.

Optionally, the policy information is used to indicate that the handover that is triggered by the PC5 reference interface communication and that is from the second PLMN in which the terminal device is located to the target PLMN is allowed to be performed. Alternatively, the policy information is used to indicate that the handover triggered by the PC5 reference interface communication is allowed to be performed for the terminal device.

Optionally, the receiving module 501 is configured to receive the information about the target PLMN from the terminal device through an access and mobility management function network element. The receiving module 501 is further configured to receive third indication information from the access and mobility management function network element, where the third indication information is used to indicate the second access network device to perform the handover of the terminal device to the target PLMN.

In addition, the receiving module 501, the processing module 502, and the sending module 503 in the handover apparatus may further implement other operations or functions of the communication device in FIG. 2, the UE in FIG. 3A and FIG. 3B, or the source RAN in FIG. 4A and FIG. 4B. Details are not described herein again.

In another embodiment, the handover apparatus shown in FIG. 5A may alternatively be configured to perform operations of the UE in FIG. 4A and FIG. 4B. Examples are as follows:

The processing module 502 is configured to determine that a source PLMN in which the handover apparatus is located does not support PC5 reference interface communication. The sending module 503 is configured to send first information to an access network device, where the first information is used to indicate one or more first PLMNs that support the PC5 reference interface communication, and the access network device is an access network device that serves a terminal device in the source PLMN.

Therefore, in this embodiment of the present invention, the handover apparatus sends the first information to a source RAN, so that the source RAN determines a target PLMN, and receives handover indication information from the source RAN, to hand over the UE to the target PLMN that supports the PC5 reference interface communication. In this way, the PC5 reference interface communication can be performed without interrupting a current service, thereby improving user experience.

Optionally, the sending module 503 is further configured to send, to the access network device, either or both of the following information: cause value information or handover request information, where the cause value information is used to indicate that the handover is triggered by the PC5 reference interface communication, and the handover request information is used to request the access network device to perform the handover of the terminal device.

Optionally, the receiving module 501 is configured to receive handover indication information from the access network device, where the handover indication information is used to indicate the handover of the terminal device to the target PLMN, and the target PLMN is a PLMN in the one or more first PLMNs.

Optionally, the sending module 503 is configured to send the first information to the access network device when the handover apparatus has a requirement for the PC5 reference interface communication.

Optionally, the sending module 503 is configured to send the first information to the access network device through an access and mobility management function network element.

In addition, the receiving module 501, the processing module 502, and the sending module 503 in the handover apparatus may further implement other operations or functions of the UE in FIG. 4A and FIG. 4B. Details are not described herein again.

FIG. 5B is a schematic diagram of another possible structure of a handover apparatus in the foregoing embodiments. As shown in FIG. 5B, the handover apparatus includes a transceiver 504 and a processor 505. For example, the processor 505 may be a general-purpose microprocessor, a data processing circuit, an application-specific integrated circuit (application specific integrated circuit, ASIC), or a field programmable gate array (field- programmable gate arrays, FPGA) circuit. The handover apparatus may further include a memory 506. For example, the memory is a random access memory (random access memory, RAM). The memory is configured to be coupled to the processor 505, and stores a computer program 5061 that is necessary for the handover apparatus.

In addition, the handover apparatus in the foregoing embodiments further provides a carrier 507. The carrier stores a computer program 5071 of the handover apparatus, and can load the computer program 5071 into the processor 505. The carrier may be an optical signal, an electrical signal, an electromagnetic signal, or a computer-readable storage medium (for example, a hard disk).

When the computer program 5061 or the computer program 5071 is run on a computer (for example, the processor 505), the computer is enabled to perform the foregoing methods.

For example, in an embodiment, the processor 505 is configured to implement other operations or functions of a communication device (for example, the communication device in FIG. 2, the UE in FIG. 3A and FIG. 3B, or the source RAN in FIG. 4A and FIG. 4B). The transceiver 504 is configured to implement communication between the communication device and a terminal device (the UE in FIG. 4A and FIG. 4B)/a second access network device (the source RAN)/an access and mobility management function network element (AMF).

In another embodiment, the processor 505 is configured to implement other operations or functions of a second access network device (the source RAN in FIG. 4A and FIG. 4B). The transceiver 504 is configured to implement communication between the second access network device and a terminal device (UE)/an access and mobility management function network element (AMF).

In another embodiment, the processor 505 is configured to implement other operations or functions of a terminal device (the UE in FIG. 4A and FIG. 4B). The transceiver 504 is configured to implement communication between the terminal device and an access network device (the source RAN)/an access and mobility management function network element (AMF).

One or more of the foregoing modules or units may be implemented by using software, hardware, or a combination thereof. When any one of the foregoing modules or units is implemented by using software, the software exists in a form of computer program instructions, and is stored in a memory. A processor may be configured to execute the program instructions to implement the foregoing method procedures. The processor may include but is not limited to at least one of the following computing devices that run various types of software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions. The processor may be embedded in an SoC (a system-on-a-chip) or an application-specific integrated circuit (application specific integrated circuit, ASIC), or may be an independent semiconductor chip. In addition to a core configured to execute software instructions to perform an operation or processing, the processor may further include a necessary hardware accelerator, such as a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a DSP, an MCU, an artificial intelligence processor, an ASIC, an SoC, an FPGA, a PLD, a dedicated digital circuit, a hardware accelerator, or a non-integrated discrete device, and the hardware may run necessary software or does not depend on software, to perform the foregoing method procedures.

All or some of the foregoing embodiments may be implemented by software, hardware, firmware, or any combination thereof. When software is used for implementation, all or some of the embodiments may be implemented in a form of a computer program product. The computer program product includes one or more computer instructions. When computer program instructions are loaded and executed on a computer, all or some of the procedures or the functions according to the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

In the foregoing specific implementations, the objectives, technical solutions, and benefits of the present invention are further described in detail. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A handover method, comprising:
obtaining, by a communication device, first information, wherein the first information is used to indicate one or more first public land mobile networks PLMNs that support prose communication PC5 reference interface communication;
determining, by the communication device, a target PLMN, wherein the target PLMN is a PLMN in the one or more first PLMNs; and
requesting, by the communication device, handover from a source PLMN to the target PLMN, wherein the source PLMN does not support the PC5 reference interface communication.

2. The method according to claim 1, wherein the determining, by the communication device, a target PLMN comprises:
obtaining, by the communication device, second information, wherein the second information is used to indicate a second PLMN in which a first access network device that supports the PC5 reference interface communication is located; and determining, by the communication device, the target PLMN based on the first information and the second information.

3. The method according to claim 1 or 2, wherein when the communication device is a terminal device, the method further comprises:
sending, by the communication device, information about the target PLMN to a second access network device that serves the terminal device in the source PLMN.

4. The method according to claim 3, wherein the requesting, by the communication device, handover from a source PLMN to the target PLMN comprises:
requesting, by the communication device, the handover from the source PLMN to the target PLMN when the communication device has a requirement for the PC5 reference interface communication.

5. The method according to claim 3 or 4, further comprising:
sending, by the communication device to the second access network device, either or both of the following information: first cause value information or first handover indication information, wherein the first cause value information is used to indicate that the handover is triggered by the PC5 reference interface communication, and the first handover indication information is used to indicate the second access network device to hand over the terminal device to the target PLMN, or the first handover indication information is used to indicate the second access network device to hand over the terminal device to a target access network device, wherein the target access network device is an access network device in a target cell in the target PLMN.

6. The method according to any one of claims 3 to 5, further comprising:
receiving, by the communication device, second handover indication information from the second access network device, wherein the second handover indication information is used to indicate the second access network device to perform the handover of the terminal device.

7. The method according to claim 1 or 2, wherein when the communication device is a second access network device that serves a terminal device in the source PLMN, the obtaining, by a communication device, first information comprises:
receiving, by the communication device, the first information from the terminal device.

8. The method according to claim 7, wherein the requesting, by the communication device, handover from a source PLMN to the target PLMN comprises: sending, by the communication device, third handover indication information to the terminal device, wherein the third handover indication information is used to indicate the communication device to perform the handover of the terminal device to the target PLMN.

9. The method according to claim 7 or 8, further comprising:
receiving, by the communication device, either or both of the following information: second cause value information or fourth handover indication information, wherein the second cause value information is used to indicate that the handover is triggered by the PC5 reference interface communication, and the fourth handover indication information is used to indicate the second access network device to perform the handover of the terminal device.

10. A handover method, comprising:
receiving, by a second access network device from a terminal device, information about a target public land mobile network PLMN determined based on first information and second information, wherein the first information is used to indicate one or more first PLMNs that support prose communication PC5 reference interface communication, and the second information is used to indicate a second PLMN in which a first access network device that supports the PC5 reference interface communication is located; and
sending, by the second access network device, a handover request to an access and mobility management function network element, wherein the handover request is used to request to hand over the terminal device from a source PLMN to the target PLMN, and the source PLMN does not support the PC5 reference interface communication.

11. The method according to claim 10, further comprising:
sending, by the second access network device, first handover indication information to the terminal device, wherein the first handover indication information is used to indicate the second access network device to hand over the terminal device to the target PLMN.

12. The method according to claim 10 or 11, further comprising:
receiving, by the second access network device from the terminal device, either or both of the following information: cause value information or second handover indication information, wherein the cause value information is used to indicate that the handover is triggered by the PC5 reference interface communication, and the handover indication information is used to indicate the second access network device to hand over the terminal device to the target PLMN, or the handover indication information is used to indicate the second access network device to hand over the terminal device to a target access network device, wherein the target access network device is an access network device in a target cell in the target PLMN.

13. A handover method, comprising:
determining, by a terminal device, that a source public land mobile network PLMN in which the terminal device is located does not support prose communication PC5 reference interface communication; and
sending, by the terminal device, first information to an access network device, wherein the first information is used to indicate one or more first PLMNs that support the PC5 reference interface communication, and the access network device is an access network device that serves the terminal device in the source PLMN.

14. The method according to claim 13, further comprising:
receiving, by the terminal device, handover indication information from the access network device, wherein the handover indication information is used to indicate handover of the terminal device to a target PLMN, and the target PLMN is a PLMN in the one or more first PLMNs.

15. The method according to claim 13 or 14, wherein the sending, by the terminal device, first information to an access network device comprises:
sending, by the terminal device, the first information to the access network device when the terminal device has a requirement for the PC5 reference interface communication.

16. A handover apparatus, comprising:
a receiving module, configured to obtain first information, wherein the first information is used to indicate one or more first public land mobile networks PLMNs that support prose communication PC5 reference interface communication; and
a processing module, configured to determine a target PLMN, wherein the target PLMN is a PLMN in the one or more first PLMNs, wherein
the processing module is configured to request handover from a source PLMN to the target PLMN, wherein the source PLMN does not support the PC5 reference interface communication.

17. The apparatus according to claim 16, wherein
the receiving module is configured to obtain second information, wherein the second information is used to indicate a second PLMN in which a first access network device that supports the PC5 reference interface communication is located; and
the processing module is configured to determine the target PLMN based on the first information and the second information.

18. The apparatus according to claim 16 or 17, wherein when the handover apparatus is a terminal device, the apparatus further comprises:
a sending module, configured to send information about the target PLMN to a second access network device that serves the terminal device in the source PLMN.

19. The apparatus according to claim 18, wherein
the processing module is configured to request the handover from the source PLMN to the target PLMN when the handover apparatus has a requirement for the PC5 reference interface communication.

20. The apparatus according to claim 18 or 19, wherein
the sending module is further configured to send, to the second access network device, either or both of the following information: first cause value information or first handover indication information, wherein the first cause value information is used to indicate that the handover is triggered by the PC5 reference interface communication, and the first handover indication information is used to indicate the second access network device to hand over the terminal device to the target PLMN, or the first handover indication information is used to indicate the second access network device to hand over the terminal device to a target access network device, wherein the target access network device is an access network device in a target cell in the target PLMN.

21. The apparatus according to any one of claims 18 to 20, wherein
the receiving module is further configured to receive second handover indication information from the second access network device, wherein the second handover indication information is used to indicate the second access network device to perform the handover of the terminal device.

22. The apparatus according to claim 16 or 17, wherein when the handover apparatus is a second access network device that serves a terminal device in the source PLMN, the receiving module is configured to receive information about the first PLMNs from the terminal device.

23. The apparatus according to claim 22, wherein
the sending module is configured to send third handover indication information to the terminal device, wherein the third handover indication information is used to indicate the handover apparatus to perform the handover of the terminal device to the target PLMN.

24. The apparatus according to claim 22 or 23, wherein
the receiving module is further configured to receive either or both of the following information: second cause value information or fourth handover request information, wherein the second cause value information is used to indicate that the handover is triggered by the PC5 reference interface communication, and the fourth handover indication information is used to indicate the second access network device to perform the handover of the terminal device.

25. A handover apparatus, comprising:
a receiving module, configured to receive, from a terminal device, information about a target public land mobile network PLMN determined based on first information and second information, wherein the first information is used to indicate one or more first PLMNs that support prose communication PC5 reference interface communication, and the second information is used to indicate a second PLMN in which a first access network device that supports the PC5 reference interface communication is located; and
a sending module, configured to send a handover request to an access and mobility management function network element, wherein the handover request is used to request to hand over the terminal device from a source PLMN to the target PLMN, and the source PLMN does not support the PC5 reference interface communication.

26. The apparatus according to claim 25, wherein
the sending module is further configured to send first handover indication information to the terminal device, wherein the first handover indication information is used to indicate the handover apparatus to hand over the terminal device to the target PLMN.

27. The apparatus according to claim 25 or 26, wherein
the receiving module is further configured to receive, from the terminal device, either or both of the following information: cause value information or second handover indication information, wherein the cause value information is used to indicate that the handover is triggered by the PC5 reference interface communication, and the handover indication information is used to indicate the second access network device to hand over the terminal device to the target PLMN, or the handover indication information is used to indicate the second access network device to hand over the terminal device to a target access network device, wherein the target access network device is an access network device in a target cell in the target PLMN.

28. A handover apparatus, comprising:
a processing module, configured to determine that a source public land mobile network PLMN in which the terminal device is located does not support prose communication PC5 reference interface communication; and
a sending module, configured to send first information to an access network device, wherein the first information is used to indicate one or more PLMNs that support the PC5 reference interface communication, and the access network device is an access network device that serves the terminal device in the source PLMN.

29. The apparatus according to claim 28, further comprising:
a receiving module, configured to receive handover indication information from the access network device, wherein the handover indication information is used to indicate handover of the terminal device to a target PLMN, and the target PLMN is a PLMN in the one or more first PLMNs.

30. The apparatus according to claim 28 or 29, wherein
the sending module is configured to send the first information to the access network device when the handover apparatus has a requirement for the PC5 reference interface communication.
